# EUROPEAN PATENT APPLICATION

(11) **EP 2 911 126 A1**
(43) Date of publication of application: **26.08.2015**
(21) Application number: 14194305.0
(22) Date of filing: 21.11.2014
(51) Int. Cl.: G08B 13/14, H04R 1/10

(54) **Method and device for protecting terminal apparatus and terminal apparatus and medium**

(30) Priority: 19.02.2014 CN 201410056912
(71) Applicant: Xiaomi Inc., Beijing 100085 (CN)
(72) Inventor: Hou, Baicen, Haidian District (CN); Tang, Mingyong, Haidian District, (CN); Hua, Chengping, Haidian District (CN)
(74) Representative: Hanna, Peter William Derek

(57) **Abstract**

The disclosure relates to a method and a device for providing a terminal apparatus with anti-theft protection. The method includes: obtaining (S101) state information of a terminal apparatus plugged with an earphone; determining (S102) whether the state information meets a preset condition; activating (S103) an alarm mode of the terminal apparatus when the state information meets the preset condition. According to the disclosure, since it is determined automatically whether the alarm mode of the terminal apparatus is required to be activated based on state information of a terminal apparatus, the alarm mode of the terminal apparatus can be activated based on environment information of the terminal apparatus without the user manually activating the alarm mode of the terminal apparatus, so that the user's experience is improved. Moreover, the invention does not rely upon the user remembering to start the alarm mode, and thus the security of the terminal apparatus is further improved.

## Description

### TECHNICAL FIELD

The present disclosure relates to the field of terminal apparatus protection, in particular anti-theft protection.

### BACKGROUND

With the continuous development of terminal technology, the terminal apparatus has more varied functions and provides good experiences for a user, and people are increasingly using a terminal apparatus in various occasions. For example, people use a terminal apparatus of one kind or another to surf, watch videos, listen to music and the like when taking a public vehicle, and use the terminal apparatus to listen to music, record information about running (a running route, a running duration) or the like when running.

As people increasingly use a terminal apparatus in various occasions, in particular use in public places, the terminal apparatus becomes a target of robbers and pick-pockets. For example, when a user listens to music with earphones plugged into the terminal apparatus, the terminal apparatus is generally kept in a pocket or a carry-on bag, which offers an opportunity for criminals so that they can steal the terminal apparatus, unplug the earphones quickly and run away. Therefore, a method for protecting the terminal apparatus is required.

### SUMMARY

To overcome problems in the related art, the invention provides a method for protecting a terminal apparatus and a device thereof, and a terminal apparatus which has an anti-theft function, in accordance with claims which follow.

According to a first aspect of the disclosure, a method for protecting a terminal apparatus is provided. The method includes: obtaining state information of a terminal apparatus plugged with an earphone; determining whether the state information meets a preset condition; and activating an alarm mode of the terminal apparatus when the state information meets the preset condition.

In an embodiment, the state information includes one or more of the following information: environment information of the terminal apparatus, motion information of the terminal apparatus, information about a program running in the terminal apparatus, information about whether the terminal apparatus is in a screen-off state, and information about whether an image captured by a front-facing camera of the terminal apparatus includes a face.

In an embodiment, the environment information of the terminal apparatus includes one or more of the following information: GPS information of the terminal apparatus and a name of Wi-Fi network within which the terminal is located.

In an embodiment, after the alarm mode of the terminal apparatus is activated the method also includes: it is detected whether the earphone is unplugged; and an alarm operation is performed when it is detected that the earphone is unplugged.

In an embodiment, the alarm operation includes one or more of the following manners: an audible alarm, a vibration alarm, a flashing alarm, and a lock screen operation which is required to be unlocked by using a password.

In an embodiment, the alarm operation is continued if it is detected that the earphone is plugged into the terminal apparatus during the alarm operation.

According to a second aspect of the disclosure, a device for protecting terminal apparatus is provided. The device includes: an obtaining module configured to obtain state information of a terminal apparatus plugged with an earphone; determining module configured to determine whether the state information meets a preset condition; and an activation module configured to activate an alarm mode of the terminal apparatus when the state information meets the preset condition.

In an embodiment, the state information includes one or more of the following information: environment information of the terminal apparatus, motion information of the terminal apparatus, a program running on the terminal apparatus, whether the terminal apparatus is in a screen-off state, and information about whether an image captured by a front-facing camera of the terminal apparatus includes a face.

In an embodiment, the environment information of the terminal apparatus includes one or more of the following information: GPS information of the terminal apparatus and a name of Wi-Fi network within which the terminal is located.

In an embodiment, the device also includes: a detection module configured to detect whether the earphone is unplugged after the alarm mode of the terminal apparatus is activated; and a performing module configured to perform an alarm operation when it is detected that the earphone is unplugged.

In an embodiment, the alarm operation includes one or more of the following manners: audible alarm, vibration alarm, flashing alarm, and lock screen operation which is required to be unlocked by using a password.

In an embodiment, the performing module is further configured to continue to perform the alarm operation if it is detected that the earphone is plugged into the terminal apparatus during the alarm operation.

According to a third aspect of the disclosure, a device for protecting a terminal apparatus is provided. The device includes: a processor; and a memory for storing instructions executable by the processor. The processor is configured to obtain state information of a terminal apparatus plugged with an earphone, determine whether the state information meets a preset condition, and activate an alarm mode of the terminal apparatus when the state information meets the preset condition.

According to a fourth aspect of the disclosure, a non-transitory readable storage medium is provided. The non-transitory readable storage medium includes instructions executable by one or more processors in a terminal and for causing the one or more processors to obtain state information of a terminal apparatus plugged with an earphone, determine whether the state information meets a preset condition, and activate an alarm mode of the terminal apparatus when the state information meets the preset condition.

The solutions provided by the embodiments of the disclosure may have the following advantages.

Since it is determined whether the alarm mode of the terminal apparatus is required to be activated based on the state information of the terminal apparatus, the alarm mode of the terminal apparatus can be activated based on the environment information of the terminal apparatus without a user manually activating the alarm mode of the terminal apparatus, so that the user's experience is improved. Moreover, since the alarm mode of the terminal apparatus can be activated only based on the state information of the terminal apparatus, it does not rely upon the user remembering to start the alarm mode, and thus the security of the terminal apparatus is further improved.

It is to be understood that both the foregoing general description and the following detailed description are exemplary and explanatory only.

### BRIEF DESCRIPTION OF THE DRAWINGS

Fig. 1 is a flowchart showing a method for protecting a terminal apparatus according to an exemplary embodiment.
Fig. 2 is a flowchart showing a method for protecting a terminal apparatus according to an exemplary embodiment.
Fig. 3 is a flowchart showing a method for protecting a terminal apparatus according to an exemplary embodiment.
Fig. 4 is a flowchart showing a method for protecting a terminal apparatus according to an exemplary embodiment.
Fig. 5 is a flowchart showing a method for protecting a terminal apparatus according to an exemplary embodiment.
Fig. 6 is a flowchart showing a method for protecting a terminal apparatus according to an exemplary embodiment.
Fig. 7 is a block diagram showing a device for protecting a terminal apparatus according to an exemplary embodiment.
Fig. 8 is a block diagram showing a device for protecting a terminal apparatus according to an exemplary embodiment.
Fig. 9 is a block diagram showing a device according to an exemplary embodiment.

### DETAILED DESCRIPTION

Herein, exemplary embodiments will be described in detail, examples of which are shown in figures.

To make the objects, solutions and advantages of the disclosure clearer, reference will now be made in detail to exemplary embodiments, examples of which are illustrated in the accompanying drawings. The following exemplary embodiments and description thereof intend to illustrate, rather than to limit, the disclosure. Unless stated clearly otherwise, same numerals in different figures indicate same or similar elements when the description refers to figures.

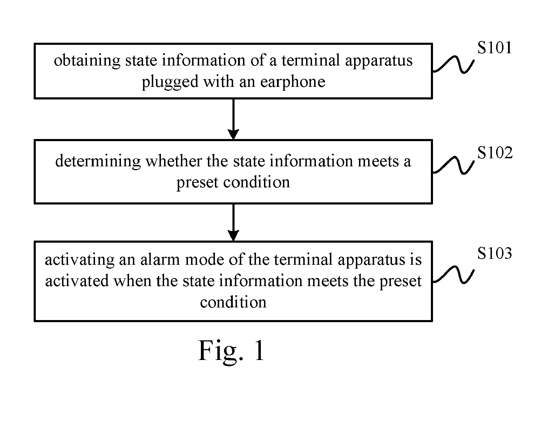

Fig. 1 is a flowchart showing a method for protecting a terminal apparatus according to an exemplary embodiment. As shown in Fig. 1, the method for protecting a terminal apparatus is applied to the terminal apparatus and includes the following steps.

In step 101, state information of a terminal apparatus plugged with an earphone is obtained.

The state information includes, but is not limited to, one or more of the following information: environment information of the terminal apparatus, motion information of the terminal apparatus, information about a program running on the terminal apparatus and information about whether the terminal apparatus is in a screen-off state.

For example, the environment information of the terminal apparatus includes: GPS information of the terminal apparatus and a name of Wi-Fi network within which the terminal is located.

For example, the motion information of the terminal apparatus includes, but is not limited to, one or more of the following information: a vibration frequency of the terminal apparatus, a displacement of the terminal apparatus, a speed of the terminal apparatus and an acceleration of the terminal apparatus.

In Step S102, it is determined whether the state information meets a preset condition.

In step 103, an alarm mode of the terminal apparatus is activated when the state information meets the preset condition.

The alarm mode of the terminal apparatus means that the terminal apparatus performs alarm operation to warn the user when the earphone that is plugged into terminal apparatus is unplugged. The alarm operation includes, but is not limited to, one or more of the following manners: an audible alarm, a vibration alarm, a flashing alarm, and a lock screen operation which is required to be unlocked by using a password.

According to the method for protecting a terminal apparatus provided by the disclosure, since it is determined whether the alarm mode of the terminal apparatus is required to be activated based on the state information of the terminal apparatus, the alarm mode of the terminal apparatus can be activated based on the environment information of the terminal apparatus without a user manually activating the alarm mode of the terminal apparatus, so that the user's experience is improved. Moreover, since the alarm mode of the terminal apparatus can be appropriately activated based on the state information of the terminal apparatus, a situation that the user forgets to start the alarm mode may be avoided, and thus the security of the terminal apparatus is further improved.

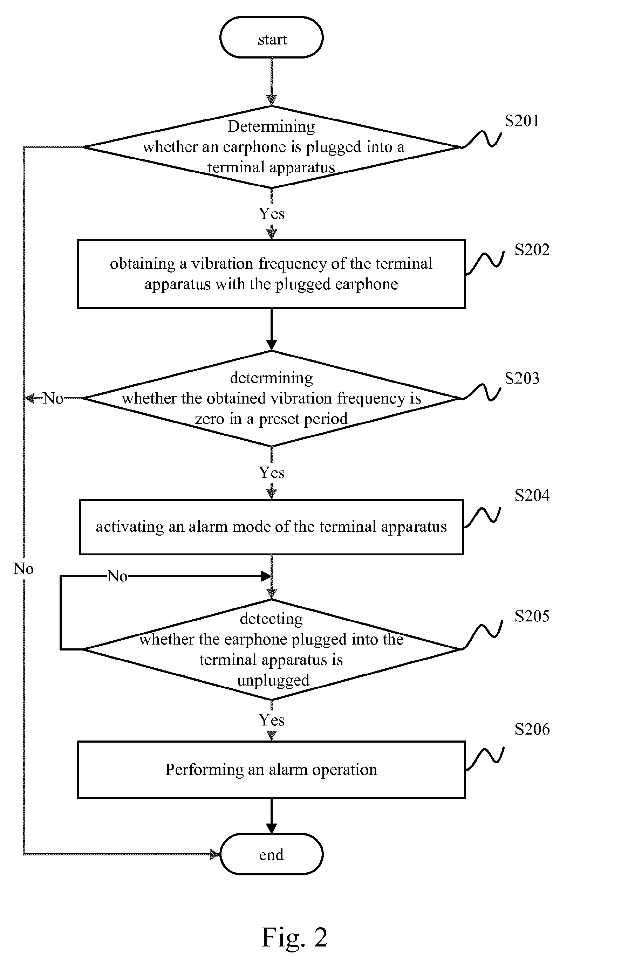

Fig. 2 is a flowchart showing a method for protecting a terminal apparatus according to another exemplary embodiment. As shown in Fig. 2, the method for protecting a terminal apparatus is applied to a terminal apparatus. In this embodiment, a preset condition for activating an alarm mode of the terminal apparatus is that a vibration frequency of the terminal apparatus is not zero in a preset period. The method includes the following steps.

In step 201, it is determined whether an earphone is plugged into the terminal apparatus; if yes, the process proceeds to step 202; and if no, the process is at an end.

In step 202, the vibration frequency of the terminal apparatus with the plugged earphone is obtained.

Motion information may be obtained through a vibration sensor, an acceleration sensor provided in the terminal apparatus. Additionally, the motion information may be obtained through GPS technology. For example, a return value of GPS is changed due to a person's movement; therefore, it is possible to detect a change of GPS' value to determine whether the terminal apparatus is in a state in which its location is changing. When the user using the terminal apparatus is in a walking or running state, the terminal apparatus carried by the user can generate a corresponding acceleration, a vibration frequency or a displacement. Therefore, it can be determined whether the user (and the terminal apparatus) is in a motion state by using the current motion information of the terminal apparatus.

In step 203, it is determined whether the obtained vibration frequency is zero in the preset period; if yes, the process proceeds to step S204; and if no, the process is at an end.

When the vibration frequency of the motion information is not zero, it is determined that the terminal apparatus is in a motion state.

In step 204, the alarm mode of the terminal apparatus is activated.

In step 205, it is detected whether the earphone plugged into the terminal apparatus is unplugged; if yes, the process proceeds to step 206; and if no, step 205 is performed repeatedly.

A process of unplugging the earphone from a terminal apparatus such as a smart phone may cause small variations of current. A state of plugging and unplugging and an action process may be determined through detecting the variations of current.

In step 206, the alarm operation is performed.

The alarm operation includes, but is not limited to, one or more of the following manners: an audible alarm, a vibration alarm, a flashing alarm, and a lock screen operation which is required to be unlocked by using a password. For example, the alarm operation includes the audible alarm with loudest sound in a system, the flashing alarm with strongest light of LED, the vibration alarm with highest vibration frequency and the lock screen operation in which the screen displays an interface for inputting a password to require a user to input a preset figure or number to unlock the screen. The phone cannot perform any instructions before the screen is unlocked; if the input password is wrong, the terminal apparatus keeps the lock-screen state until the right password is input; if the right password is input, the alarm is deactivated, the sound stops, the flash light of the LED is turned off, the vibration stops and the phone is switched back to a normal state.

In the embodiment, once it is detected that the terminal apparatus is in the motion state, the alarm mode of the terminal apparatus terminal is activated, thereby providing protection for a terminal apparatus used by a user in a motion state such as a walking state and a running state.

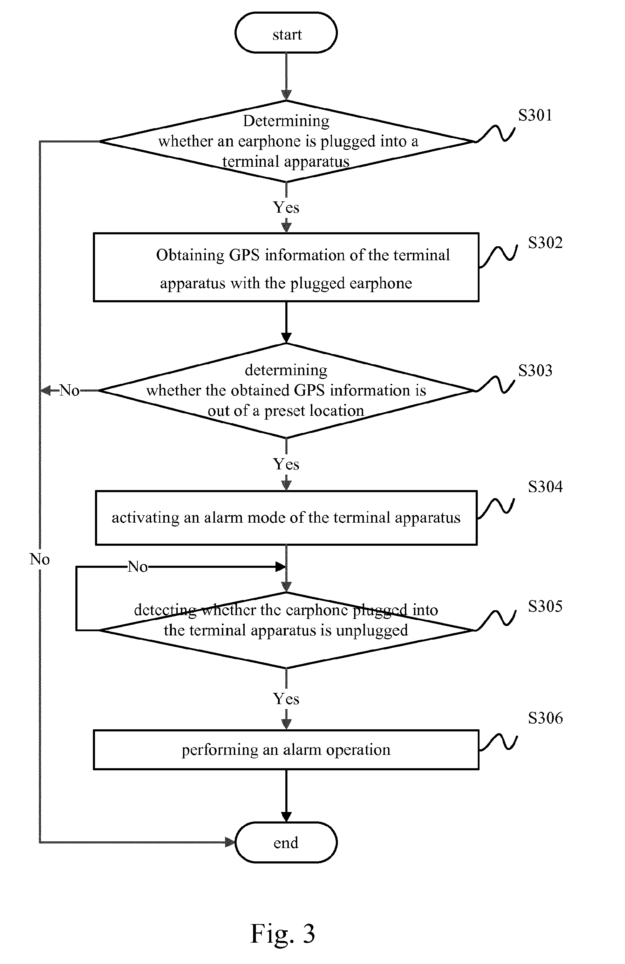

Fig. 3 is a flowchart showing a method for protecting a terminal apparatus according to another exemplary embodiment. As shown in Fig. 2, the method for protecting a terminal apparatus is applied to a terminal apparatus. In this embodiment, a preset condition for activating an alarm mode of the terminal apparatus is that the GPS information of the terminal apparatus is out of a preset location. The method includes the following steps.

In step 301, it is determined whether an earphone is plugged into the terminal apparatus; if yes, the process proceeds to step 302; and if no, the process is ended.

In step 302, the GPS information of the terminal apparatus with the plugged earphone is obtained.

In step 303, it is determined whether the obtained GPS information is out of the preset location; if yes, the process proceeds to step S304; if no, the process is ended.

For example, the preset location includes a location of home, a location of company, so that it can be determined whether the terminal apparatus is in home or company according to the obtained GPS information.

In step 304, the alarm mode of the terminal apparatus is activated.

In step 305, it is detected whether the earphone plugged into the terminal apparatus is unplugged; if yes, the process proceeds to step 306; if no, step 305 is performed repeatedly.

In step 306, the alarm operation is performed.

In the embodiment, once it is detected that the terminal apparatus is out of a preset location, the alarm mode of the terminal apparatus is activated, which can provide protection for terminal apparatus in service environment other than home and company.

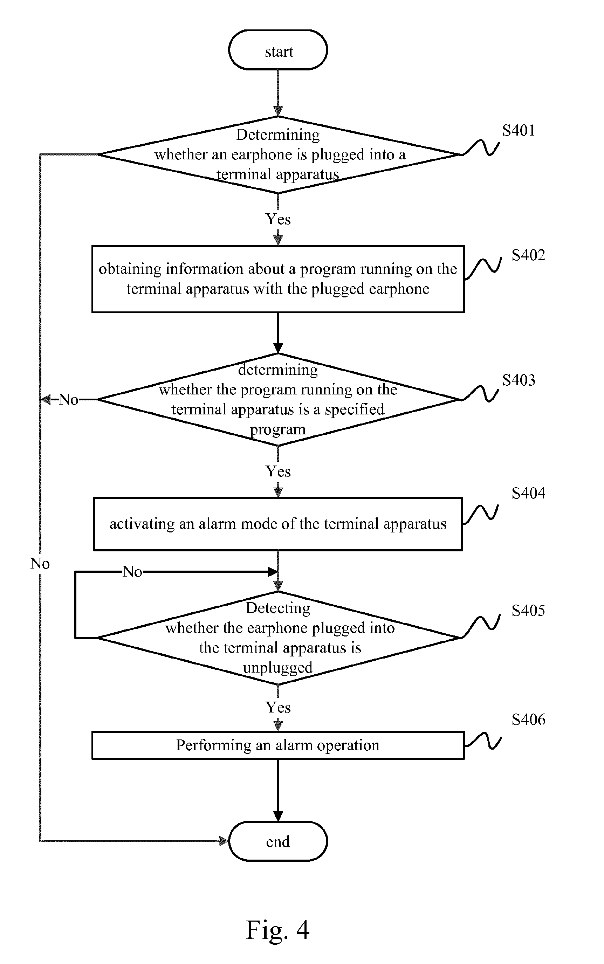

Fig. 4 is a flowchart showing a method for protecting a terminal apparatus according to another exemplary embodiment. As shown in Fig. 4, the method for protecting a terminal apparatus is applied to a terminal apparatus. In this embodiment, a preset condition for activating an alarm mode of the terminal apparatus is that the program running on the terminal apparatus is a specified program. The method includes the following steps.

In step 401, it is determined whether an earphone is plugged into the terminal apparatus; if yes, the process proceeds to step 402; and if no, the process is ended.

In step 302, the information about a program running on the terminal apparatus with the plugged earphone is obtained.

In step 303, it is determined whether the program running on the terminal apparatus is a specified program; if yes, the process proceeds to step S404; if no, the process is ended.

For example, the specified program may be an application program for playing music, an application program for receiving radio broadcast, an application program for receiving a call. The phone may be put in a pocket when the user uses these application programs.

In step 404, the alarm mode of the terminal apparatus is activated.

In step 405, it is detected whether the earphone plugged into the terminal apparatus is unplugged; if yes, the process proceeds to step 406; and if no, step 405 is performed repeatedly.

In step 406, the alarm operation is performed.

In the embodiment, once it is detected that the program running on the terminal apparatus is the specified program (a user generally wears the earphone and then puts the terminal apparatus in a pocket when using these application programs), the alarm mode of the terminal apparatus is activated, thereby providing a protection for the terminal apparatus with the earphone.

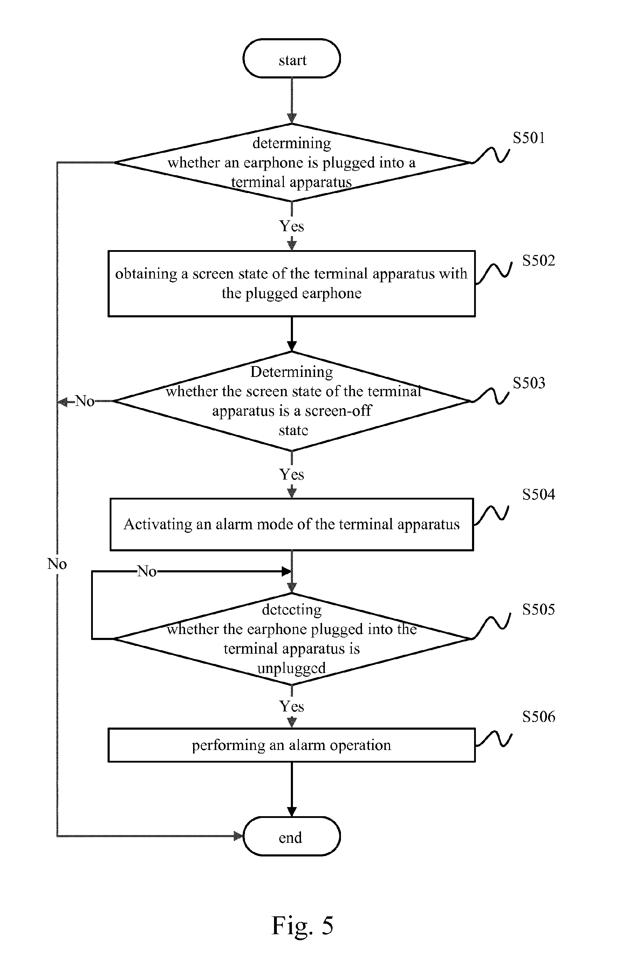

Fig. 5 is a flowchart showing a method for protecting a terminal apparatus according to another exemplary embodiment. As shown in Fig. 5, the method for protecting a terminal apparatus is applied to a terminal apparatus. In this embodiment, a preset condition for activating an alarm mode of the terminal apparatus is that a screen state of the terminal apparatus is a screen-off state. The method includes the following steps.

In step 501, it is determined whether an earphone is plugged into the terminal apparatus; if yes, the process proceeds to step 502; if no, the process is ended.

In step 502, the screen state of the terminal apparatus with the plugged earphone is obtained.

In step 503, it is determined whether the screen state of the terminal apparatus is the turn-off state; if yes, the process proceeds to step S504; if no, the process is ended.

In step 504, the alarm mode of the terminal apparatus is activated.

In step 505, it is detected whether the earphone plugged into the terminal apparatus is unplugged; if yes, the process proceeds to step 506; if no, step 505 is performed repeatedly.

In step 506, the alarm operation is performed.

In the embodiment, the alarm mode of the terminal apparatus terminal is activated only when it is detected that the screen of the terminal apparatus is in the screen-off state, so as to avoid resource waste due to activating the alarm mode when the user watches video or plays game while using the earphone, since the terminal apparatus is not as easily stolen when the user is holding the apparatus while watching a video or playing a game.

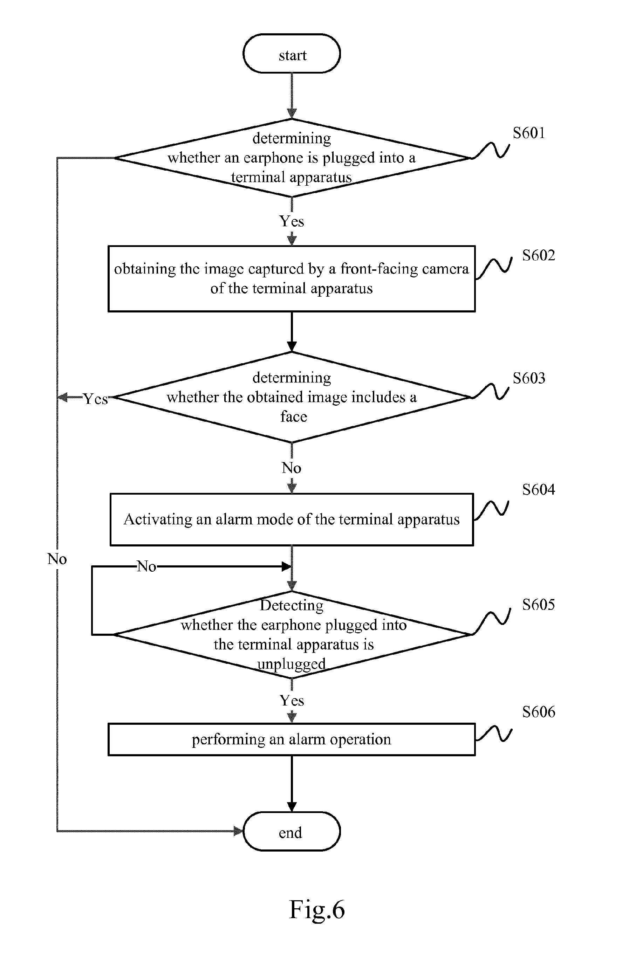

Fig. 6 is a flowchart showing a method for protecting a terminal apparatus according to another exemplary embodiment. As shown in Fig. 6, the method for protecting a terminal apparatus is applied to a terminal apparatus. In this embodiment, an image captured by a front-facing camera of the terminal apparatus is obtained, and an alarm mode of the terminal apparatus is not activated when the image includes a face. The method includes the following steps.

In step 601, it is determined whether an earphone is plugged into the terminal apparatus; if yes, the process proceeds to step 602; if no, the process is ended.

In step 602, the image captured by a front-facing camera of the terminal apparatus is obtained.

In step 603, it is determined whether the obtained image includes a face; if yes, the process proceeds to step S604; if no, the process is at an end.

Alternatively, it is determined whether the obtained image includes a specified face, such as a face of the owner of the terminal apparatus.

In step 604, the alarm mode of the terminal apparatus is activated.

In step 605, it is detected whether the earphone plugged into the terminal apparatus is unplugged; if yes, the process proceeds to step 606; if no, step 605 is performed repeatedly.

In the embodiment, when it is detected that the image captured by a front-facing camera includes the specified face, the alarm mode of the terminal apparatus terminal is not activated. That is because the case in which the image captured by a front-facing camera includes the specified face means that the user is facing and holding the terminal apparatus, and in this case the terminal apparatus is not as easily stolen. Therefore, it can avoid resource waste due to activating the alarm mode.

In another embodiment of the disclosure, if it is detected that the earphone is plugged into the terminal apparatus again during alarm operation, the alarm apparatus may be continued.

In other embodiments of the disclosure, two or more items of implementations of the above embodiments may be combined. For example, an implementation of determining whether the program running on the terminal apparatus is the specified program, and another implementation of determining whether the screen state of the terminal apparatus is the screen-off state, may be combined, so that the alarm operation is performed when the application program running on the terminal apparatus is a music player and the screen of the terminal apparatus is in the screen-off state. That is because the on state of the screen generally means that the user is using the terminal apparatus in a visible range, and it is unnecessary to perform the alarm operation. For example, an implementation of determining whether the obtained GPS information is out of the preset location, and another implementation of determining whether the image obtained by the front-facing camera includes a face, may be combined, so that the alarm operation is performed when the GPS information obtained by the terminal apparatus is out of the preset location and the image obtained by the front-facing camera does not include a face. That is because there may be a case that the GPS information of the terminal apparatus is out of the preset location but the user is using the terminal apparatus face to face, and thus it is unnecessary to perform the alarm operation so as to save resources.

Accordingly, the person skilled in the art should appreciate that the method for protecting a terminal apparatus according to the disclosure is intended to automatically activate the alarm operation of the terminal apparatus when preset conditions are met, so as not to interfere with the user's normal operation as much as possible, and a time cost for the user of learning by habit to manually activate the alarm mode at times when the terminal apparatus is easily lost may be reduced. Meanwhile, since the alarm mode may be activated automatically, to a degree, the user may avoid losing the mobile phone by forgetting to start the alarm mode or before the user starts the alarm mode, so that the function that "activating alarm upon unplugging the earphone" can provide better experience and have a better operational effect. The preset condition may be set as required and is not limited to embodiments of the disclosure.

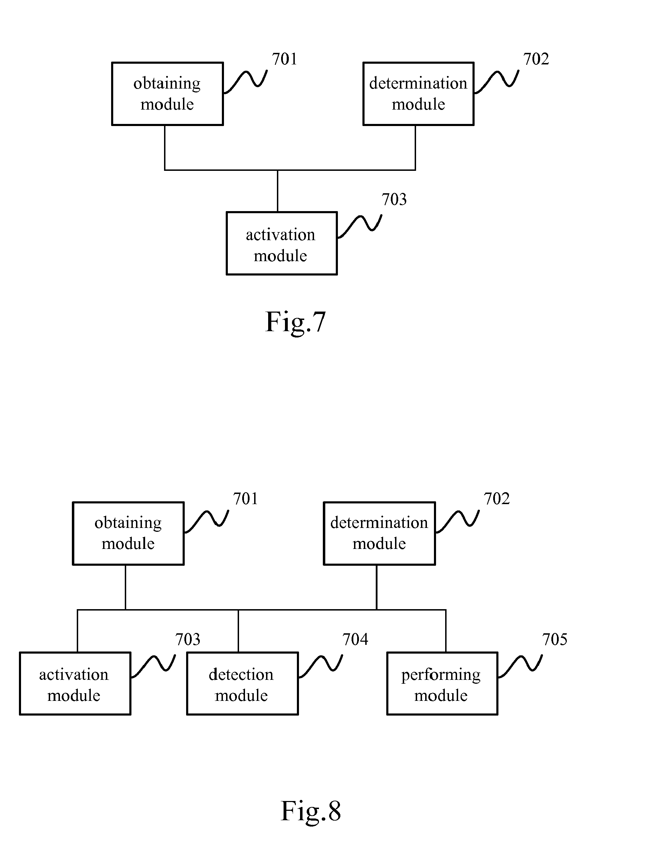

Fig. 7 is a block diagram showing a device for protecting a terminal apparatus according to an exemplary embodiment. As shown in Fig.7, the device includes an obtaining module 701, a determining module 702 and an activation module 703.

The obtaining module 701 is configured to obtain state information of a terminal apparatus plugged with an earphone.

The determining module 702 is configured to determine whether the state information meets a preset condition.

The activation module 703 is configured to activate an alarm mode of the terminal apparatus when the state information meets the preset condition.

The state information includes, but is not limited to, one or more of the following information: environment information of the terminal apparatus, motion information of the terminal apparatus, information about a program running on the terminal apparatus, information about whether the terminal apparatus is in a screen-off state, and information about whether an image captured by a front-facing camera of the terminal apparatus includes a face.

The environment information of the terminal apparatus includes one or more of the following information: GPS information of the terminal apparatus and a name of Wi-Fi network within which the terminal is located.

As shown in Fig. 8, the device also includes a detection module 704 and a performing module 705.

The detection module 704 is configured to detect whether the earphone is unplugged after the alarm mode of the terminal apparatus is activated.

The performing module 705 is configured to perform the alarm operation when it is detected that the earphone is unplugged.

The alarm operation includes one or more of the following manners: an audible alarm, a vibration alarm, a flashing alarm, and a lock screen operation which is required to be unlocked by using a password.

The performing module 705 is also configured to continue to perform the alarm operation if it is detected that the earphone is plugged into the terminal apparatus during the alarm operation.

As for the device according to the above embodiments, the implementation that respective modules of the device perform operations has been described in detail in corresponding embodiments of the method, and thus will not be repeated.

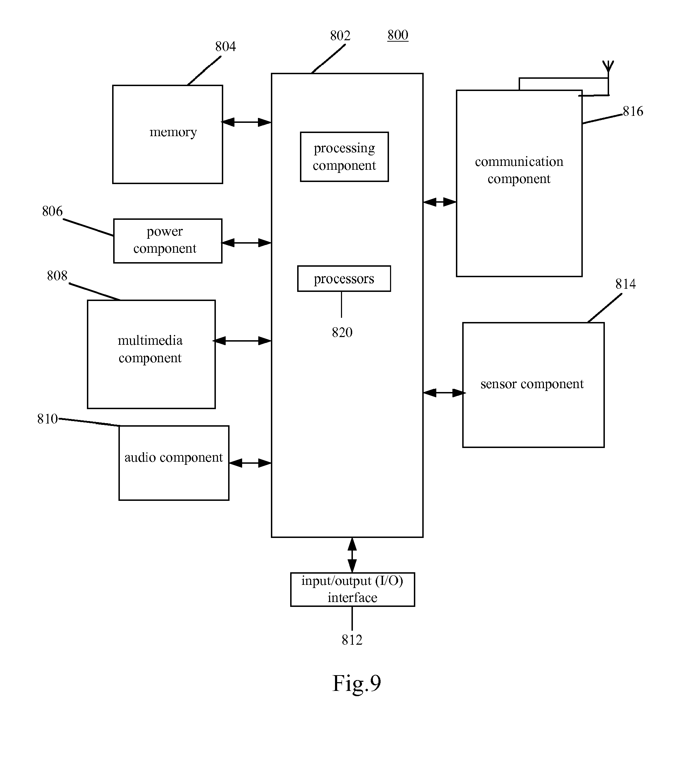

Fig. 9 is a block diagram of a device 800 for protecting a terminal apparatus according to an exemplary embodiment. For example, the terminal apparatus may be a mobile phone, a computer, a digital broadcast terminal, a messaging device, a gaming console, a tablet, a medical device, an exercise apparatus, a personal digital assistant, or the like.

Referring to Fig. 9, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium has stored therein instructions that, when executed by a processor of a terminal apparatus, cause the terminal apparatus to perform a method for protecting a terminal apparatus, and the method comprises the following steps of obtaining state information of a terminal apparatus plugged with an earphone; determining whether the state information meets a preset condition; and activating an alarm mode of the terminal apparatus when the state information meets the preset condition.

## Claims

1. A method for protecting a terminal apparatus, **characterized in that** the method comprises:
obtaining (S101) state information of a terminal apparatus plugged with an earphone;
determining (S102) whether the state information meets a preset condition; and
activating (S103) an alarm mode of the terminal apparatus when the state information meets the preset condition.

2. The method according to claim 1, wherein the state information comprises one or more of the following information: environment information of the terminal apparatus, motion information of the terminal apparatus, information about a program running in the terminal apparatus (S403), information about whether the terminal apparatus is in a screen-off state (S503), and information about whether an image captured by a front-facing camera of the terminal apparatus (S602) includes a face.

3. The method according to claim 1, wherein the environment information of the terminal apparatus comprises one or more of the following information: GPS information of the terminal apparatus (S303) and a name of Wi-Fi network within which the terminal is located.

4. The method according to claim 1, wherein after the alarm mode of the terminal apparatus is activated the method further comprises:
detecting (S205) whether the earphone is unplugged; and
performing (S206) an alarm operation when it is detected that the earphone is unplugged.

5. The method according to claim 4, wherein the alarm operation comprises one or more of the following manners: an audible alarm, a vibration alarm, a flashing alarm, and a lock screen operation which is required to be unlocked by using a password.

6. The method according to claim 4, wherein the alarm operation is continued if it is detected that the earphone is plugged into the terminal apparatus during the alarm operation.

7. A device for protecting a terminal apparatus, **characterized in that** the device comprises:
an obtaining module (701) configured to obtain state information of a terminal apparatus plugged with an earphone;
a determination module (702) configured to determine whether the state information meets a preset condition; and
an activation module (703) configured to activate an alarm mode of the terminal apparatus when the state information meets the preset condition.

8. The device according to claim 7, wherein the state information comprises one or more of the following information: environment information of the terminal apparatus, motion information of the terminal apparatus, information about a program running on the terminal apparatus, information about whether the terminal apparatus is in a screen-off state, and information about whether an image captured by a front-facing camera of the terminal apparatus includes a face.

9. The device according to claim 8, wherein the environment information of the terminal apparatus comprises one or more of the following information: GPS information of the terminal apparatus and a name of Wi-Fi network within which the terminal is located.

10. The device according to claim 7, wherein the device further comprises:
a detection module (704) configured to detect whether the earphone is unplugged after the alarm mode of the terminal apparatus is activated; and
a performing module (705) configured to perform an alarm operation when it is detected that the earphone is unplugged.

11. The device according to claim 10, wherein the alarm operation comprises one or more of the following manner: an audible alarm, a vibration alarm, flashing alarm, and a lock screen operation which is required to be unlocked by using a password.

12. The device according to claim 10, wherein the performing module (705) is further configured to continue to perform the alarm operation if it is detected that the earphone is plugged into the terminal apparatus during the alarm operation.

13. A device for protecting a terminal apparatus, **characterized in that** the device comprises:
a processor (802); and
a memory (804) for storing instructions executable by the processor;
wherein the processor is configured to:
obtain (S101) state information of a terminal apparatus plugged with an earphone;
determine (S102) whether the state information meets a preset condition; and
activate (S103) an alarm mode of the terminal apparatus when the state information meets the preset condition.

14. A non-transitory readable storage medium comprising instructions executable by one or more processors in a terminal and for causing the one or more processors to:
obtain (S101) state information of a terminal apparatus plugged with an earphone;
determine (S102) whether the state information meets a preset condition; and
activate (S103) an alarm mode of the terminal apparatus when the state information meets the preset condition.

15. A computer program, which when executing on a processor, performs the method according to any one of claims 1 to 6.
